# EUROPÄISCHE PATENTANMELDUNG

(11) **EP 1 544 088 A1**
(43) Veröffentlichungstag der Anmeldung: **22.06.2005**
(21) Anmeldenummer: 04027238.7
(22) Anmeldetag: 17.11.2004
(51) Int. Cl.: B62D 33/06, B62D 33/063, B60P 3/34

(54) **Fahrerkabine**

(30) Priorität: 16.12.2003 DE 10358825
(71) Anmelder: DaimlerChrysler AG, 70567 Stuttgart (DE)
(72) Erfinder: Rastetter, Ina, 75382 Althengstett (DE)

(57) **Zusammenfassung**

Die Erfindung betrifft eine Fahrerkabine für einen Lastkraftwagen, deren Innenraum durch ein Modul (20) vergrößerbar ist, das zur Vergrößerung des Innenraums aus einer eingefahrenen Gebrauchsstellung in eine ausgefahrene Gebrauchsstellung verlagerbar ist.

Um eine Fahrerkabine zu schaffen, die in unterschiedlichen Ausführungsformen einfach und kostengünstig herstellbar ist, ist an dem Modul (20) mindestens eine Befestigungseinrichtung (30) angebracht, mit deren Hilfe Innenraumeinrichtungsgegenstände aus einer Fahrstellung (34,41,43) in eine Wohnstellung (33,42,44) verlagerbar sind.

## Beschreibung

Die Erfindung betrifft eine Fahrerkabine für einen Lastkraftwagen, deren Innenraum durch ein Modul vergrößerbar ist, das zur Vergrößerung des Innenraums aus einer eingefahrenen Gebrauchsstellung in eine ausgefahrene Gebrauchsstellung verlagerbar ist.

Aus der deutschen Offenlegungsschrift DE 199 43 539 A1 ist eine Fahrerkabine für einen Lastkraftwagen bekannt, deren Innenraum durch ein Modul vergrößerbar ist, das wenigstens ein zur Außenhaut der Fahrerkabine gehörendes Abdeckelement umfasst. Zur Vergrößerung des Kabinenvolumens ist das Modul aus einer eingefahrenen Gebrauchsstellung in eine ausgefahrene Gebrauchsstellung verlagerbar. Der Freiraum zwischen den Umfangsseiten des Moduls und den korrespondieren Umfangsseiten der Fahrerkabine ist in der ausgefahrenen Gebrauchsstellung durch Abdeckmittel geschlossen. In der ausgefahrenen Gebrauchsstellung des Moduls wird für die Insassen bei abgestelltem Fahrzeug ein größerer Innenraum geschaffen, der beispielsweise als Schlafbereich nutzbar ist. Demgegenüber ist die Fahrerkabine im Fahrbetrieb auf die eingefahrene Gebrauchsstellung verkürzbar, um eine unerwünschte Verlängerung der Fahrerkabine zu vermeiden. Insbesondere für Zugmaschinen von Sattelschleppern hat sich ein nach hinten ausfahrbares Rückwandmodul als besonders vorteilhaft gezeigt, da der im Fahrbetrieb nötige Schwenkraum hinter der Fahrerkabine bei abgestelltem Fahrzeug zusätzlich genutzt werden kann.

Aufgabe der Erfindung ist es, eine Fahrerkabine gemäß Oberbegriff des Anspruchs 1 zu schaffen, die in unterschiedlichen Ausführungsformen einfach und kostengünstig herstellbar ist.

Die Aufgabe ist bei einer Fahrerkabine für einen Lastkraftwagen, deren Innenraum durch ein Modul vergrößerbar ist, das zur Vergrößerung des Innenraums aus einer eingefahrenen Gebrauchsstellung in eine ausgefahrene Gebrauchsstellung verlagerbar ist, dadurch gelöst, dass an dem Modul mindestens eine Befestigungseinrichtung angebracht ist, mit deren Hilfe Innenraumeinrichtungsgegenstände aus einer Fahrstellung in eine Wohnstellung verlagerbar sind. In der Fahrstellung befindet sich das Modul in der eingefahrenen Gebrauchsstellung. Die Innenraumeinrichtungsgegenstände sind in der Fahrstellung auf engstem Raum in dem Modul untergebracht und gegebenenfalls nur eingeschränkt zugänglich. In der Wohnstellung befindet sich das Modul in der ausgefahrenen Gebrauchsstellung und ein Teil der Innenraumeinrichtungsgegenstände kann relativ zu den übrigen Innenraumeinrichtungsgegenständen aus dem Modul heraus verlagert werden, so dass der Zugang zu den einzelnen Innenraumeinrichtungsgegenständen vereinfacht wird. Durch die Verlagerung einzelner Innenraumeinrichtungsgegenstände wird der Platz im Innenraum der Fahrerkabine sowohl in der Fahrstellung als auch in der Wohnstellung optimal genutzt. Bei den Innenraumeinrichtungsgegenständen kann es sich um Schränke, Waschbecken, Küchengeräte, Tische etc. handeln.

Ein bevorzugtes Ausführungsbeispiel der Fahrerkabine ist dadurch gekennzeichnet, dass die Befestigungseinrichtung mindestens eine im Wesentlichen horizontal angeordnete Schiene umfasst. An der Schiene können die Innenraumeinrichtungsgegenstände ausziehbar angebracht werden. Mit Hilfe von Fixierelementen können die Innenraumeinrichtungsgegenstände in der Wohnstellung oder in der Fahrstellung fixiert werden.

Ein weiteres bevorzugtes Ausführungsbeispiel der Fahrerkabine ist dadurch gekennzeichnet, dass die Schiene an einer Seitenwand des Moduls befestigt ist. Die Schiene ist vorzugsweise so in die Seitenwand integriert, dass sie wenig auffällt. Dadurch wird der optische Gesamteindruck des Innenraums der Fahrerkabine nicht beeinträchtigt.

Ein weiteres bevorzugtes Ausführungsbeispiel der Fahrerkabine ist dadurch gekennzeichnet, dass an dem Modul ein Bett befestigt ist. Das Bett kann in herkömmlicher Art und Weise an dem Modul befestigt sein. Vorzugsweise erstreckt sich das Bett quer zur Fahrzeuglängsrichtung zwischen den beiden gegenüberliegenden Seitenwänden des Moduls. Gemäß einer besonderen Ausführungsform der Erfindung kann das Bett aber auch in Fahrzeuglängsrichtung angeordnet sein.

Ein weiteres bevorzugtes Ausführungsbeispiel der Fahrerkabine ist dadurch gekennzeichnet, dass das Bett schwenkbar an dem Modul befestigt ist. Wenn das Bett nicht benutzt wird, kann es so verschwenkt werden, dass der ansonsten von dem Bett eingenommene Raum für andere Zwecke oder Innenraumeinrichtungsgegenstände genutzt werden kann.

Ein weiteres bevorzugtes Ausführungsbeispiel der Fahrerkabine ist dadurch gekennzeichnet, dass zumindest ein Teil der Innenraumeinrichtungsgegenstände in der Fahrstellung im Bereich des Bettes und in der Wohnstellung zwischen einem Fahrersitz und dem Bett angeordnet ist. In der Fahrstellung kann der Innenraum des Moduls im Bereich des Bettes mit Innenraumeinrichtungsgegenständen ausgefüllt sein. In der Wohnstellung können die Innenraumeinrichtungsgegenstände so verlagert werden, dass sowohl das Bett als auch die Innenraumeinrichtungsgegenstände gut zugänglich und nutzbar sind.

Ein weiteres bevorzugtes Ausführungsbeispiel der Fahrerkabine ist dadurch gekennzeichnet, dass die Befestigungseinrichtung oberhalb des Bettes angeordnet ist. An der Befestigungseinrichtung können zum Beispiel Schränke verschiebbar geführt sein. Die Schränke sind in der Fahrstellung oberhalb des Bettes angeordnet. In der Wohnstellung sind die Schränke herausgezogen und befinden sich in dem Zwischenraum zwischen Bett und Fahrersitz. Durch diese spezielle Anordnung sind die Schränke einer stehenden Person zugänglich.

Ein weiteres bevorzugtes Ausführungsbeispiel der Fahrerkabine ist dadurch gekennzeichnet, dass die Innenraumeinrichtungsgegenstände einen Schrank umfassen. Der Schrank muss während der Fahrt nicht zugänglich sein und kann daher oberhalb des Bettes angeordnet sein.

Ein weiteres bevorzugtes Ausführungsbeispiel der Fahrerkabine ist dadurch gekennzeichnet, dass die Befestigungseinrichtung unterhalb des Bettes angeordnet ist. An der Befestigungseinrichtung kann zum Beispiel ein Tisch oder ein Kühlschrank verschiebbar geführt sein. Die Innenraumeinrichtungsgegenstände sind in der Fahrstellung unterhalb des Bettes angeordnet. In der Wohnstellung sind die Innenraumeinrichtungsgegenstände herausgezogen und befinden sich in dem Zwischenraum zwischen Bett und Fahrersitz.

Ein weiteres bevorzugtes Ausführungsbeispiel der Fahrerkabine ist dadurch gekennzeichnet, dass die Innenraumeinrichtungsgegenstände einen Kühlschrank oder einen Tisch umfassen. Der Kühlschrank oder Tisch muss während der Fahrt nicht zugänglich sein und kann daher unterhalb des Bettes angeordnet sein. Im ausgezogenen Zustand, also in der Wohnstellung, sind Kühlschrank oder Tisch gut zugänglich.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein.

Dabei zeigen:
- Fig. 1: eine schematische, perspektivische Darstellung einer erfindungsgemäßen Fahrerkabine mit einem Modul zur Vergrößerung des Innenraums in der ausgefahrenen Gebrauchsstellung;
- Fig. 2: eine schematische, perspektivische Darstellung eines Klappschemels, der in dem Innenraum der Fahrerkabine aus Figur 1 angeordnet sein kann;
- Fig. 3: eine schematische, perspektivische Darstellung eines Ausschnitts eines Schranks, der in dem Innenraum der Fahrerkabine aus Figur 1 angeordnet sein kann und
- Fig. 4: eine schematische, perspektivische Darstellung einer Fahrerkabine gemäß einer weiteren Ausführungsform der Erfindung mit einem in Fahrzeuglängsrichtung angeordneten Bett.

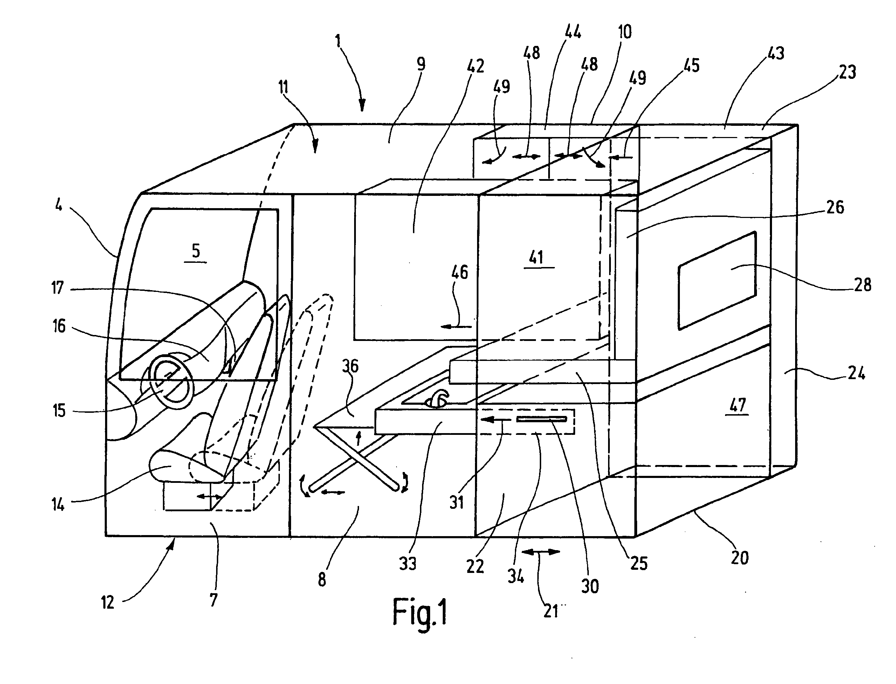

In Figur 1 ist eine Fahrerkabine 1 eines Lastkraftwagens schematisch und perspektivisch dargestellt. Die Fahrerkabine 1 umfasst eine Frontwand 4, in der eine Öffnung 5 für eine Windschutzscheibe ausgespart ist. Die Fahrerkabine 1 ist seitlich durch Seitenwände 7, 8 und 9, 10 begrenzt, die in Fahrzeuglängsrichtung gegenüberliegend angeordnet sind. Nach oben hin wird die Fahrerkabine 1 durch ein Dach 11 und nach unten hin durch einen Boden 12 begrenzt.

Hinter der Frontwand 4 sind ein Fahrersitz 14 und ein Lenkrad 15 vorgesehen. Rechts vom Lenkrad 15 ist ein Touchscreen 16 angeordnet, der unter anderem zur Bedienung der Fahrerkabine 1 verwendet werden kann. Rechts von dem Touchscreen 16 ist ein Staubsauger 17 angeordnet.

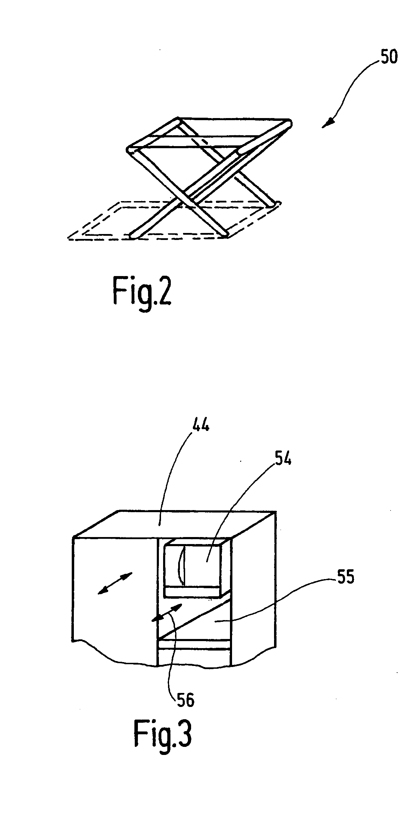

Nach hinten ist die Fahrerkabine 1 durch ein Rückwandmodul 20 verlängert, das relativ zu der Fahrerkabine 1 verschiebbar geführt ist, wie durch einen Doppelpfeil 21 angedeutet ist. Das Rückwandmodul 20 umfasst zwei gegenüberliegende Seitenwände 22 und 23 sowie eine Rückwand 24. Nach oben und nach unten ist das Rückwandmodul durch ein nicht näher bezeichnetes Dach und einen nicht näher bezeichneten Boden abgeschlossen. Das Rückwandmodul 20 befindet sich in Figur 2 in der ausgefahrenen Gebrauchsstellung. Wenn das Rückwandmodul 20 in seine eingefahrene Gebrauchsstellung verlagert wird, kommen die Seitenwände 22, 23 des Rückwandmoduls 20 mit den Seitenwänden 8 und 10 der Fahrerkabine 1 im Wesentlichen zur Deckung. Der Aufbau und die Funktion des Rückmoduls 20 werden als bekannt vorausgesetzt und daher hier nicht weiter erläutert.

An der Rückwand 24 des Rückwandmoduls 20 ist ein Bett 25, 26 schwenkbar angebracht. Mit 25 ist das Bett im heruntergeklappten Zustand bezeichnet. Mit 26 ist das Bett im hochgeklappten Zustand bezeichnet. Im Bereich des Bettes 25, 26 ist an der Rückwand 24 darüber hinaus ein Bilderrahmen 28 angebracht. Der Bilderrahmen 28 ist nur im heruntergeklappten Zustand 25 des Bettes sichtbar. Im hochgeklappten Zustand 26 des Bettes ist der Bilderrahmen 28 verdeckt.

An der Seitenwand 22 des Rückwandmoduls 20 ist eine Schiene 30 befestigt. An der Schiene 30 ist ein Waschbecken 33 verschiebbar geführt, wie durch einen Pfeil 31 angedeutet ist. Das Waschbecken 33 befindet sich in dem in Figur 1 dargestellten Zustand der Wohnstellung. Die Wohnstellung entspricht dem ausgezogenen Zustand. Der eingezogene Zustand des Waschbeckens 33 ist durch eine gestrichelte Linie 34 angedeutet und wird als Fahrstellung bezeichnet. Unterhalb oder oberhalb des Waschbeckens 33 kann ein Brett herausziehbar angebracht sein, dessen Oberfläche im ausgezogenen Zustand als Arbeitsfläche dienen kann.

Zwischen dem Fahrersitz 14 und dem Bett 25, 26 ist ein Klapptisch 36 angeordnet. Durch Pfeile sind die verschiedenen Schwenk- und Verstellmöglichkeiten des Klapptischs 36 angeordnet. Der Klapptisch 36 bietet in der dargestellten Wohnstellung reichlich Platz zur Aufnahme von beliebigen Gegenständen. In der Wohnstellung kann der Klapptisch 36 in dem Raum unterhalb des Bettes 25 angeordnet werden. Der Fahrersitz 14 kann drehbar ausgebildet sein. In einer gegenüber der dargestellten Position um 180° verdrehten Position bietet der Fahrersitz 14 eine komfortable Sitzmöglichkeit an dem Klapptisch 36. Oberhalb des Bettes 25 und des Waschbeckens 33 sind Schränke 41, 42, 43, 44 an den Seitenwänden 22, 23 des Rückwandmoduls 20 verschiebbar angebracht. Mit 41 und 43 ist die gestrichelt dargestellte eingezogene Fahrstellung der Schränke bezeichnet. Mit 42 und 44 ist die ausgezogene Wohnstellung der Schränke bezeichnet. Die Verschiebung der Schränke 41 bis 44 ist durch Pfeile 45, 46 angedeutet. Die Verschiebbarkeit der Schränke 41 bis 44 wird durch (nicht dargestellte) Schienen gewährleistet, die an den Seitenwänden 22, 23 des Rückwandmoduls 20 befestigt sind. Unterhalb des Bettes 45 ist ein Stauraum 47 vorgesehen, der zum Beispiel zur Aufnahme des Klapptischs 36 dient. Darüber hinaus kann in dem Stauraum 47 ein Kühlschrank angeordnet sein. Der Kühlschrank kann mit Hilfe von Schienen verschiebbar an den Seitenwänden 22, 23 oder an der Rückwand 24 des Rückwandmoduls 20 geführt sein.

Durch Pfeile 48, 49 ist angedeutet, dass der Schrank 44, ebenso wie der Schrank 42, mit Schiebetüren oder mit Schwenktüren ausgestattet sein kann. Aus Platzgründen sind Schiebetüren vorzuziehen.

In Figur 2 ist ein Klappschemel 50 dargestellt, der herausnehmbar am Boden der in Figur 1 dargestellten Fahrerkabine 1 angebracht sein kann. Der Klappschemel kann auch im Boden der Fahrerkabine versenkt werden. Nach dem gleichen Prinzip kann auch ein Wäscheständer in die Fahrerkabine integriert werden. Der Klappschemel oder ein entsprechender Wäscheständer können anstelle eines Beifahrersitzes in der Fahrerkabine angeordnet sein.

In Figur 3 ist ein Ausschnitt eines Schranks 44 aus der in Figur 1 dargestellten Fahrerkabine gemäß einer weiteren Ausführungsform dargestellt. Der in Figur 3 dargestellte Schrank 44 ist auf der linken Seite, wie durch einen Pfeil 53 angedeutet ist, mit einer Schwenktüre ausgestattet. Auf der rechten Seite ist der Schrank 44 offen. Ein Fernseher 54 ist in der rechten Hälfte des Schranks 44 verschiebbar aufgenommen, wie durch einen Pfeil 56 angedeutet ist. Unterhalb des Fernsehers 54 ist ein Regalboden 55 angeordnet.

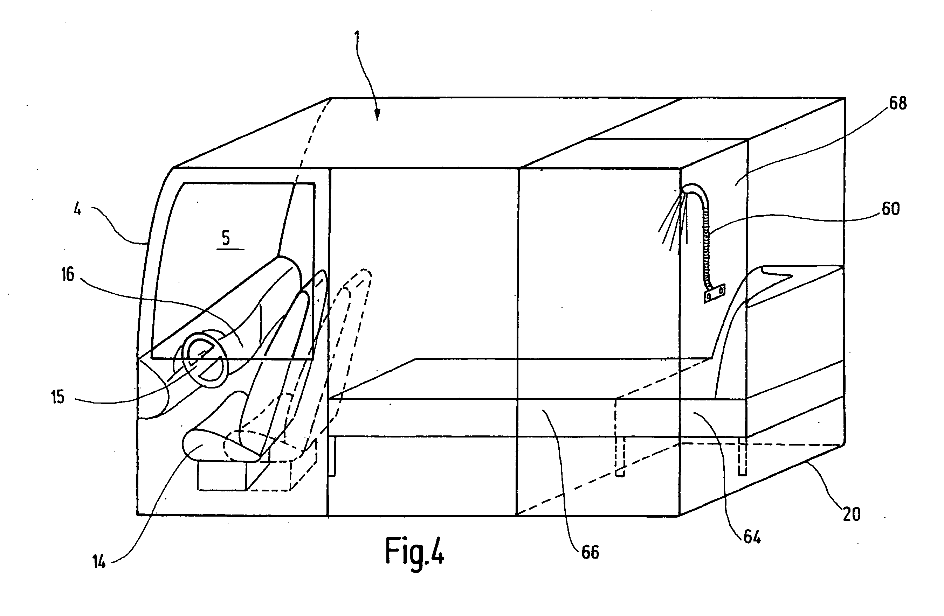

In Figur 4 ist eine Fahrerkabine 1 schematisch, perspektivisch dargestellt, die der Fahrerkabine 1 aus Figur 1 ähnelt. Um Wiederholungen zu vermeiden, wird im Folgenden nur auf die Unterschiede zwischen den beiden Ausführungsformen eingegangen.

Bei dem in Figur 4 dargestellten Ausführungsbeispiel ist in der Fahrerkabine 1 ein relativ langes und breites Bett 66 in Fahrzeuglängsrichtung angeordnet. Das Bett 66 ist an ein Sesselsofa 64 angebaut, das in dem Rückwandmodul 20 aufgenommen ist. An einer Zwischenwand 68, die das Rückwandmodul 20 in einen Wohnbereich und einen Nasszellenbereich unterteilt, ist eine Dusche 60 angebracht.

## Patentansprüche

1. Fahrerkabine für einen Lastkraftwagen, deren Innenraum durch ein Modul (20) vergrößerbar ist, das zur Vergrößerung des Innenraums aus einer eingefahrenen Gebrauchsstellung in eine ausgefahrene Gebrauchsstellung verlagerbar ist,
**dadurch gekennzeichnet,**
**dass** an dem Modul (20) mindestens eine Befestigungseinrichtung (30) angebracht ist, mit deren Hilfe Innenraumeinrichtungsgegenstände aus einer Fahrstellung (34,41,43) in eine Wohnstellung (32,42,44) verlagerbar sind.

2. Fahrerkabine nach Anspruch 1,
**dadurch gekennzeichnet,**
**dass** die Befestigungseinrichtung mindestens eine im Wesentlichen horizontal angeordnete Schiene (30) umfasst.

3. Fahrerkabine nach Anspruch 2,
**dadurch gekennzeichnet,**
**dass** die Schiene (30) an einer Seitenwand (22) des Moduls (20) befestigt ist.

4. Fahrerkabine nach einem der vorhergehenden Ansprüche,
**dadurch gekennzeichnet,**
**dass** an dem Modul (20) ein Bett (25,26) befestigt ist.

5. Fahrerkabine nach Anspruch 4,
**dadurch gekennzeichnet,**
**dass** das Bett (25,26) schwenkbar an dem Modul (20) befestigt ist.

6. Fahrerkabine nach Anspruch 4 oder 5,
**dadurch gekennzeichnet,**
**dass** zumindest ein Teil der Innenraumeinrichtungsgegenstände in der Fahrstellung (34,41,43) im Bereich des Bettes (25) und in der Wohnstellung (33,42,44) zwischen einem Fahrersitz (14) und dem Bett (25) angeordnet sind.

7. Fahrerkabine nach einem der Ansprüche 4 bis 6,
**dadurch gekennzeichnet,**
**dass** die Befestigungseinrichtung oberhalb des Bettes (25) angeordnet ist.

8. Fahrerkabine nach Anspruch 7,
**dadurch gekennzeichnet,**
**dass** die Innenraumeinrichtungsgegenstände (41 bis 44) einen Schrank umfassen.

9. Fahrerkabine nach einem der Ansprüche 4 bis 8,
**dadurch gekennzeichnet,**
**dass** die Befestigungseinrichtung (30) unterhalb des Bettes angeordnet ist.

10. Fahrerkabine nach Anspruch 9,
**dadurch gekennzeichnet,**
**dass** die Innenraumeinrichtungsgegenstände einen Kühlschranke (47) oder einen Tisch (36) umfassen.
